(19) Europäisches Patentamt
European Patent Office
Office européen des brevets

(11) Veröffentlichungsnummer : **0 082 455 B1**

(12) **EUROPÄISCHE PATENTSCHRIFT**

(45) Veröffentlichungstag der Patentschrift : **02.11.89**

(51) Int. Cl.$^4$ : **C 08 J 3/00**, C 08 J 3/12, C 08 L 33/06

(21) Anmeldenummer : **82111551.6**

(22) Anmeldetag : **13.12.82**

(54) **Verfahren zur Herstellung blockfester, weicher Polymerperlen.**

(30) Priorität : **22.12.81 DE 3150730**

(43) Veröffentlichungstag der Anmeldung : **29.06.83 Patentblatt 83/26**

(45) Bekanntmachung des Hinweises auf die Patenterteilung : **02.11.89 Patentblatt 89/44**

(84) Benannte Vertragsstaaten : **DE FR GB IT NL**

(56) Entgegenhaltungen :
**DE-A- 2 148 224**
**US-A- 4 097 553**
**ENCYCLOPEDIA OF POLYMER SCIENCE AND TECHNOLOGY, Band 6, 1967, Seiten 399-401, John Wiley & Sons, Inc., New York, USA**
**G. Gnauck, P. Fründt:"Leichtverständliche Einführung in die Kunststoffchemie",Carl Hanser Verlag, München, Wien, 1979, Seite 23**
**B. Vollmert:"Grundriss der makromolekularen Chemie",Teil 1, E. Vollmert-Verlag, Karlsruhe, 1980, Seiten 180, 181**

(73) Patentinhaber : **Röhm GmbH**
**Kirschenallee Postfach 4242**
**D-6100 Darmstadt 1 (DE)**

(72) Erfinder : **Arndt, Peter Joseph, Dr.**
**Im Säbchen 9**
**D-6104 Seeheim-Jugenheim 2 (DE)**
Erfinder : **Siol, Werner, Dr. Dipl.-Chem.**
**Gördeler Weg 34**
**D-6100 Darmstadt 13 (DE)**
Erfinder : **Ludwig, Walter**
**Blücherstrasse 4**
**D-6140 Bensheim (DE)**
Erfinder : **Wenzel, Franz, Dr.**
**Zeyherweg 5**
**D-6100 Darmstadt (DE)**

**EP 0 082 455 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

Die Erfindung betrifft ein Verfahren zur Herstellung blockfester, weicher Polymerperlen und die nach diesem Verfahren hergestellten Perlpolymerisate.

Perlförmige Polymerisate werden in bekannter Weise nach den Verfahren der Perlpolymerisation hergestellt. Bei diesem Verfahren werden die Monomeren (disperse Phase) durch Einwirkung mechanischer Kräfte (Rührung) in einem Nichtlösungsmittel (kontinuierliche Phase) verteilt und in dieser Form polymerisiert. Das gebildete Polymerisat ist überwiegend im Monomeren löslich. Unter dem Einfluß der Grenzflächenspannung bildet das Monomere kugelförmige Tropfen. Um die Tropfenform während der Polymerisation zu erhalten und das Zusammenlaufen von Tropfen zu verhindern, setzt man dem Polymerisationsansatz sogenannte « Dispergatoren » oder Verteiler (Schutzkolloide) zu, vorzugsweise Substanzen, die sich nach beendeter Polymerisation vollständig vom dem perlförmig anfallenden Polymerisat abtrennen lassen.

Der « Verteiler » bewirkt, daß die einmal gebildeten Monomertröpfchen soweit stabilisiert werden, daß eine Vereinigung von Tropfen praktisch unterbleibt.

Als kontinuierliche Phase verwendet man in der Regel Wasser. Als zur Polymerisation geeignete Monomere kommen daher primär schwerlösliche bis wasserunlösliche, radikalisch polymerisierbare Monomere in Frage. (Vgl. Houben-Weyl, 4. Auflage, Bd. XIV/1 « Makromolekulare Stoffe », S. 406-433, G. Thieme-Verlag 1961).

Dies trifft z. B. für Styrol und substituierte Derivate, Vinylester von Carboxylsäuren, wie Vinylacetat, Ester der Acryl- und der Methacrylsäure, daneben Vinylchlorid, Vinylidenchlorid, N-Vinylcarbazol zu.

Als Verteiler kommen (wasserunlösliche) Salze anorganischer Säuren, wie Bariumsulfat oder Bariumcarbonat oder hochmolekulare Naturstoffe oder synthetische Polymere in Frage. Zu der Gruppe der hochmolekularen Verteiler gehören wasserlösliche Kolloide, wie Polyvinylalkohol, teilweise verseiftes Polyvinylacetat, Methylcellulose, Stärke, Gelatine, die Alkalisalze der Polyacrylsäure oder die Alkalisalze von Styrol- oder Vinylacetat-Maleinsäureanhydrid-Copolymeren u. a. (Vgl. Houben-Weyl, loc. cit., Seite 411-430). Das Verhältnis der wäßrigen zur Monomerenphase liegt meist bei 2 : 1 bis 4 : 1. Im Unterschied zu der Emulsionspolymerisation werden bei der Perlpolymerisation Starter eingesetzt, die in erster Näherung im Monomeren löslich, aber in Wasser unlöslich sind. Meistens liegt die angewandte Startermenge bei 0,1 bis 1 Gew.-%, bevorzugt um 0,5 Gew.-%, bezogen auf die Monomeren. Die Perlgröße läßt sich je nach den Erfordernissen zwischen 0,01 und einigen Millimetern einstellen.

Während die Verfahrenstechnik der Perlpolymerisation vielfach abgewandelt und im Zuschnitt auf die gewünschten Perlpolymeren optimiert wurde, lassen die Verfahrensprodukte teilweise noch zu wünschen übrig.

In der DE-A-21 48 224 ist ein Verfahren zur Verhinderung von Verklebungen von Granulaten aus Ethylen-Vinylacetat angegeben, die Ethylen und Vinylacetat im Molverhältnis 10 : 1 bis 1 : 2 enthalten und in welchen die Acetylgruppen bis zu 50 % verseift sein können.

Nach der Lehre der DE-A werden die nach dem mechanischen Zerkleinerungsprozeß besonders zum Verkleben neigenden Granulate mit einer wäßrigen Polyalkylmethacrylatdispersion behandelt. In der Regel bilden sich auf den Granulaten nach dem Antrocknen der Dispersion dünne Schichten des Umhüllungsmaterials, die eine pulvrige Beschaffenheit aufweisen.

In der US-A-4 097 533 wird des gleiche Prinzip wie in der DE-A-2 148 224 auf durch Emulsionspolymerisation erhaltenen Teilchen angewandt.

Bei der Perlpolymerisation ging die Tendenz dagegen eindeutig dahin, Fremdbestandteile möglichst auszuschließen oder doch deren Gehalt so niedrig wie möglich zu halten.

Das wichtigste Monomere für Acrylharzperlen stellt der Methacrylsäuremethylester dar. Werden andere Methacrylsäureester (vgl. US-A-2 440 808) oder Acrylsäureester (vgl. US-A-2 171 765) polymerisiert, so erhält man — je nach Erweichungspunkt — weiche bis klebrige Perlen, weshalb man sie oft nur als Comonomere neben anderen Derivaten der Acryl- und/oder Methacrylsäure, wie Säuren, Amiden, Nitrilen oder bivalenten Monomeren, wie Säureanhydriden, verwendet. (Vgl. H. Rauch-Puntigam, Th. Völker in « Acryl- und Methacrylverbindungen », Springer-Verlag, Berlin 1967, S. 210). Die « Härte » bzw. « Weichheit » eines Polymerisats ist jedoch nur ein sprachlicher Ausdruck für eine aus einer Reihe von physikalischen Eigenschaften, die für die technische Eignung von Polymerisaten eine Rolle spielen können ; andere, wichtige Eigenschaften sind z. B. das Molekulargewicht und die Heißsiegelbarkeit. Daraus resultiert in der Praxis häufig das bereits oben angedeutete Problem, daß Perlpolymerisate hinsichtlich ihrer physikalischen und chemischen Eigenschaften die Anforderungen der Technik gut bis optimal erfüllen, bis auf die « Weichheit » der Perlen, die sich in negativer Weise als Tendenz zum Blocken äußert. Zunächst muß mit Schwierigkeiten beim Trocknen gerechnet werden.

So müssen in der Praxis beispielsweise öfter Ablufttemperaturen eingehalten werden, welche eine rationelle Trocknung in Frage stellen. In gewissen Fällen verbietet sich z. B. die Produktion bzw. der Transport derartiger « weicher » Perlpolymerisate in der heißen Jahreszeit oder in Ländern mit hoher Durchschnittstemperatur.

Die « Härte » der Homopolymerisate aus den verschiedenen, technisch verwendeten Monomeren, kann als bekannt gelten. Als Maßzahl kann z. B. die (dilatometrisch ermittelte) Glas- oder Einfriertemperatur (Tg) gelten, die in gewissem Umfang auch vom Molekulargewicht der Acrylpolymerisate abhängig ist, bzw. die dynamische Einfriertemperatur $T_{\lambda\,max}$ nach DIN 53 445 (vgl. Esser-Vieweg, Kunststoff-Handbuch, Bd. IX, Polymethacrylate, Hanser 1975, Seite 333-339 ff) und Brandrup-Immergut, Polymer-Handbook), die in der Regel um 30 ± 5 Grad höher liegt als die Glastemperatur. Als « hart » wird ein Monomeres im Rahmen der üblichen Definitionen dann bezeichnet, wenn die Tg eines daraus hergestellten Homopolymerisates oberhalb 30 Grad C liegt.

Bei Copolymerisation kann die resultierende Tg aus den Einzelbeiträgen der Monomeren abgeleitet werden [vgl. T. G. Fox, Bull. Am. Phys. Soc. 1, 123 (1956)].

Es bestand demnach die Aufgabe, blockfeste, « weiche » Acrylatperlpolymerisate zur Verfügung zu stellen. Als « weiche » Perlpolymerisate im Sinne der hier vorliegenden Anmeldung sollen solche Polymeren und Copolymeren gelten, deren Tg unterhalb 70 Grad C liegt. Insbesondere betrifft die Anmeldung solche Acrylatperlpolymerisate, die eine Glastemperatur von < 50 Grad C aufweisen. Dazu gehören insbesondere Copolymerisate des an sich « harten » Methylmethacrylats (Tg des PMMA = 105 Grad C) mit weicheren Copolymeren, beispielsweise mit den Estern der Methacrylsäure mit $C_2$-$C_{24}$-Alkoholen bzw. den Estern der Acrylsäure mit $C_1$-$C_{24}$-Alkoholen. Technisch häufig verwendete Comonomere sind beispielsweise Äthylacrylat, 2-Äthylhexylacrylat, iso- und n-Butylmethacrylat.

Genannt seien insbesondere Copolymerisate des Methyl-methacrylates mit Butylmethacrylat (Tg Poly-n-butyl MA = 20 °C), Äthylacrylat (Tg Polyäthyl-A = — 24 °C), Methylacrylat (Tg Polymethylacrylat : + 10°), Butylacrylat (Tg Polybutylacrylat : — 45 °C), 2-Äthylhexylacrylat (Tg Poly-2-Äthylhexylacrylat : — 55 °C) oder Polymerisate, die kein Methylmethacrylat enhalten, z. B. solche, die auf Isobutylmethacrylat (Tg Polyisobutyl-MA = 53 °C) oder Butylmethacrylat (Tg Poly-n-butyl MA = 20 °C) aufgebaut sind, und die beispielsweise noch andere Ester der Acryl- und/oder der Methacrylsäure enthalten können. Daneben auch Homopolymerisate aus an sich weichen Monomeren wie Polymethylacrylat, Polybutylmethacrylat, desweiteren Copolymeren aus diesen weichen Monomeren miteinander. Weiter können die Polymerisate noch funktionelle bzw. wasserlösliche Monomere der Acryl- oder Methacrylsäure, Phenylester und (gegebenenfalls substituierte) Amide der Acryl- und/oder der Methacrylsäure, Methacryl- und/oder Acrylnitril, ferner Styrol und dessen Derivate, sowie Vinylcarboxylate, wie Vinylacetat u. a. enthalten. Als wasserlösliche bzw. hydrophile Komponenten kommen z. B. hydroxygruppenhaltige Monomeren infrage (vgl. Rauch-Puntigam, Acryl- und Methacrylverbindungen, Springer-Verlag 1967, S. 102-129). Genannt seien z. B. Hydroxyalkylester der Acryl- bzw. der Methacrylsäure. Daneben kann das Perlpolymerisat auch vernetzende Monomere enthalten.

Die Limitierung liegt dabei auf der Hand : Diese Komponenten werden die Härte des Gesamtpolymerisats nicht soweit bestimmen, daß a priori kein Blocken stattfindet bzw. die Wasserlöslichkeit nicht soweit beeinflussen, daß keine Perlpolymerisate mehr gewonnen werden können. In der Regel dürfte der Anteil der « harten » Monomeren inklusive Methylmethacrylat 80 Gew.-%, bezogen auf das Gesamtpolymerisat, nicht überschreiten ; der Anteil der hydrophilen bzw. wasserlöslichen Monomeren wird im allgemeinen unter 20 Gew.-%, insbesondere unter 5 Gew.-%, (bezogen auf das Gesamtpolymerisat) liegen. Die resultierende Härte ist — wie bereits ausgeführt — eine Funktion des Gesamtsystems, so daß zwar für die « harten » Monomeren ein ungefährer Bereich angegeben werden kann, innerhalb dessen jedoch die relativen Anteile je nach Art und Anteil der Comonomeren erheblich schwanken können.

Daneben kann das Perlpolymerisat noch vernetzende Monomere, d. h. Verbindungen mit mindestens zwei reaktiven Gruppen im Molekül enthalten, wobei als reaktive Gruppen insbesondere die Vinyl-, Vinyliden-, die (verkappte) Amidmethylol-, Carbamidmethylol-, Carbamidmethyloläther-, Azlacton und Epoxygruppen infrage kommen. Genannt seien die Acryl- und Methacrylsäureester von mehrwertigen Alkoholen wie Glykoldi(meth)acrylat, 1,3- und 1,4-Butandiol(meth)acrylat, Trimethylolpropantri(meth)acrylat, Tetraäthylenglykoldi(meth)acrylat usw., N-Methylol(meth)acrylamid, Methylenbisacrylamid und -methacrylamid, Glycidyl(meth)acrylat, ferner Alkylverbindungen wie Allyl(meth)acrylamid, Triallylcyanurat, u. ä., in der Regel in geringen Mengen, beispielsweise in 0,05 bis 2 Gew.-%, bezogen auf die Gesamtheit der Monomeren.

Es wurde nun ein Verfahren zur Herstellung blockfester, weicher Acrylat-Polymerisatperlen, die in an sich bekannter Weise durch Perlpolymerisation hergestellt werden, gefunden, wobei man nach abgeschlossener Perlpolymerisation auf die Polymerisatperlen, die eine Glastemperatur ($Tg_{Perle}$) von unter 70 Grad C besitzen, ein haftendes Deposit aus aus einer Acrylatdispersion aufbringt, wobei die Glastemperatur des Deposits ($Tg_{Deposit}$) über 40 Grad C liegt und um wenigstens 10 Grad C höher gewählt wird als die Glastemperatur der Perlen ($Tg_{Perle}$). Vorzugsweise wird das haftende Deposit aus einer wäßrigen Acrylat-Dispersion aufgebracht und anschließend getrocknet.

Es ist leicht einzusehen, daß man zur Verbesserung der Blockfestigkeit einer weniger weichen Perle, z. B. eines Perlpolymerisats mit einer Glastemperatur von 60 Grad C, ein Deposit mit einer recht hohen Glastemperatur, z. B. Tg = 80 Grad C verwenden muß. Man wählt daher die Glastemperatur des Deposites wenigstens 10 Grad C höher als die des Perlpolymerisats. Die Lösung der vorliegenden Aufgabe kann dabei sowohl mit filmbildenden Acrylatdispersionen als mit nicht-filmbildenden Acrylatdispersionen erreicht werden (sofern die Deposite die notwendige Härte besitzen). Die filmbildenden « hart » eingestellten Dispersionen hinterlassen als Deposit einen harten Schutzfilm auf den individuellen Polymerisatperlen. Bei harten, nichtfilmbildenden Acrylatdispersionen erhält man Perlen, die (bei Betrachtung unter dem Mikroskop) wie mit « Dispersionspuder » überzogen erscheinen.

Im allgemeinen genügt ein Deposit von 0,2-20 Gew.-%, vorzugsweise 0,5-5 Gew.-% an Feststoff, bezogen auf die Perlen als Feststoffe, um die Perlen blockfest auszurüsten. Grundsätzlich kommen als Acrylatdispersionen definitionsgemäß diejenigen in Frage, die ein Deposit auf den Perlen bilden, das die erforderliche Härte aufweist.

Bei der Auswahl der Acrylatdispersionen, die für eine Blockfest-Ausrüstung der Polymerisatperlen geeignet sind, können gewisse Auswahlkriterien nützlich sein. So soll z. B. das aus der Polymerisatdispersion deponierte Polymerisat die endgültige Verwendung der Perlpolymerisate möglichst wenig beeinflussen.

Hier zeigt sich der besondere Vorzug des erfindungsgemäßen Verfahrens zur Blockfestausrüstung von Acrylatperlpolymeriaten. Bei den bisherigen Verfahren zur Blockfestausrüstung von Perlpolymerisaten werden z. B. Calciumstearat (Jap-OS 79 65, 791) oder Dinatriumadipat in Kombination mit Natriumlaurylsulfat (US-A-2 448 524) verwendet. Ein anderes, weit verbreitetes Verfahren zum Klebfreimachen von Oberflächen besteht in der Zugabe von sehr feinteiligem Siliciumdioxid. In all diesen Fällen werden jedoch die anwendungstechnischen Eigenschaften, z. B. die Löslichkeit derart behandelten Perlen, deutlich verändert. Dieser Nachteil läßt sich bei Verwendung von Polymerdispersionen zur Blockfestausrüstung vermeiden.

Die erfindungsgemäß verwendete Acrylatdispersionen sind an sich bekannt. Prinzipiell gelten — abgesehen von der Härte — ähnliche Kriterien wie bei der Perlpolymerisation. Die Dispersionen sind in der Regel aufgebaut aus einer « harten » Monomerkomponente (A), bestehend aus Methylmethacrylat und/oder tert. Butylmethacrylat, Äthylmethacrylat, Isopropylmethacrylat, Isobutylmethacrylat, Phenylmethacrylat, wobei als Comonomere Styrol oder Derivaten des Styrols, wie $\alpha$-Methylstyrol und/oder Acrylsäure bzw. Methacrylsäure und/oder ein gegebenenfalls alkylsubstituiertes Acrylamid bzw. Methacrylamid und/oder Acrylnitril bzw. Methacrylnitril eingesetzt werden können, wobei die Komponente (A) vorzugsweise bzw. ausschließlich Methylmethacrylat enthält, sowie gegebenenfalls aus einer « weicheren » Monomerenkomponente (B), bestehend aus einem oder mehreren Estern der Formel I

$$CH_2 = C(R_1) - COOR_2 \qquad (I)$$

worin $R_1$ für Wasserstoff oder Methyl und $R_2$ im Falle $R_1$ für Wasserstoff steht für einen Alkylrest mit 1 bis 24 Kohlenstoffatomen, vorzugsweise 1 bis 16 Kohlenstoffatomen, im Falle $R_1$ für Methyl steht, $R_2$ für einen Alkylrest mit 5-24 Kohlenstoffatomen sowie für n-Butyl stehen soll, und gegebenenfalls einer hydrophileren Komponente (C), bestehend aus einem oder mehreren hydrophil substituierten Estern der Formel II

$$CH_2 = C(R_1') - COY - A - R_3 \qquad (II)$$

worin $R_1'$ die Bedeutung von $R_1$ besitzt und Y für Sauerstoff oder -NH, A für einen, gegebenenfalls verzweigten, gegebenenfalls cyclischen Alkylenrest mit 1 bis 10 Kohlenstoffatomen und $R_3$ für eine Hydroxy-, eine gegebenenfalls mit $C_1$ bis $C_8$-Alkyl substituierte Aminogruppe oder eine entsprechend substituierte Ammoniumgruppe oder einen heterocyclischen Rest oder aus einem Monomeren (C) der Formel III

$$CH_2 = C(H) - Het \qquad (III)$$

worin Het für einen heterocyclischen Rest, vorzugsweise Pyridin, Pyrrolidin, Pyrolidon, Imidazol, Imidazolidin, Carbazol steht.

Der Anteil der Komponente (A) wird auf jeden Fall so groß sein, daß gegebenenfalls in Kombination mit der Komponente (C) die notwendige « Härte » der resultierenden Dispersionspolymerisate erreicht wird.

Die Dispersion sollte in der bevorzugten Durchführungsform eine Glastemperatur von $> 50$ Grad C haben.

Demnach sollten von den als weich anzusehenden Monomeren B (Tg der Homopolymerisate $\leq 30$ Grad C) 0-70 Gew.-% im Dispersionspolymerisat enthalten sein.

Es ist leicht einzusehen, daß diese Obergrenze von 70 Gew.-% an Monomeren B im Polymerisat der Dispersion nur dann gelten kann, wenn die Monomeren innerhalb der Gruppe die weichen Monomeren zu den härteren zu rechnen sind, d. h. wenn Homopolymeren aus diesen Monomeren eine Glastemperatur

von etwa Raumtemperatur aufweisen. Bei Verwendung von sehr weichen Monomeren (z. B. Butylacrylat, Glastemperatur des Homopolymerisats : — 45 Grad C) ist der maximale Anteil deutlich niedriger anzusetzen. So sollten z. B. von einem Monomeren wie Butylacrylat höchstens 40 Gew.-% im Dispersionspolymerisat enthalten sein.

Die Monomeren der Gruppe C sollten in der Regel höchstens 40 Gew.-%, vorzugsweise < 20 Gew.-% des Gesamtpolymerisats ausmachen. Entsprechend der Härte ihrer Homopolymerisate werden diese Monomeren entweder Monomeren der Gruppe A ersetzen, so z. B. harte, hydrophile Monomeren wie Methacrylamid, 2-Hydroxyäthylmethacrylat oder aber wenn diese Monomeren C selbst weiche Homopolymerisate ergeben, z. B. Hydroxybutylacrylat, sind sie entsprechend gegen Anteile der Monomeren B auszutauschen.

Es ist vorteilhaft, das Dispersionspolymerisat in seinen Eigenschaften — abgesehen von der Härte — dem Perlpolymerisat anzugleichen. Daher stimmt man die Zusammensetzung der Polymerdispersionen auf die der Perlpolymerisate ab und achtet bei der Auswahl der bei der Herstellung der Dispersionen verwendeten Hilfsstoffe auf Kompatibilität mit der weiteren Verwendung der Perlpolymerisate.

So kann es z. B. wichtig sein, daß die Löslichkeit der deponierten Polymerisate und der verwendeten Hilfsstoffe in nicht-wäßrigen Lösungsmitteln in etwa der Löslichkeit der Perlpolymerisate entspricht.

Es kann z. B. erwartet werden, daß Dispersionen, deren Monomerenzusammenstzung qualitativ der der Polymerisatperlen entspricht oder nicht entscheidend davon abweicht, die sich aber in quantitativer Hinsicht unterscheidet, indem sie einen höheren Gehalt an einem oder mehreren « harten » Monomeren aufweisen, als das Perlpolymerisat einen gut haftenden Überzug auf dem Restpolymerisat bilden.

Als Ansatzpunkt für die Optimierung der einzusetzenden Dispersionen wird erfindungsgemäß davon ausgegangen, daß die Dispersion wenigstens eine um 10 Grad C höhere Glastemperatur aufweise als die damit behandelte Perle. In der Regel wird die Glastemperatur der Dispersion die des Perlpolymerisats jedoch um mehr als 20 Grad C übertreffen. (Vgl. hierzu die in Tab. 1 genannten Beispiele).

Eine niedrigere Differenz in der Glastemperatur zwischen Perlpolymerisat und Dispersion gestattet im allgemeinen den Einsatz von sehr gut miteinander verträglichen Polymeren, eine sehr gute Differenz in der Glastemperatur bewirkt andererseits einen ausgezeichneten Schutz gegen ein Verklumpen der Teilchen. Man wird daher die Dispersionszusammensetzung entsprechend den anwendungstechnischen Erfordernissen auswählen.

Die Herstellung der Acrylatdispersionen kann in an sich bekannter Weise erfolgen. Dabei kann vorteilhaft nach dem Emulsions- oder Monomerzulaufverfahren gearbeitet werden, wobei ein Teil des Wassers sowie die Gesamtmenge oder Anteile des Initiators und des Emulgators vorgelegt werden. Die Teilchengröße läßt sich bei diesen Verfahren mit Vorteil durch die Menge des vorgelegten Emulgators steuern. Als Emulgatoren sind vor allem anionische und nichtionische Tenside, daneben aber auch kationische Tenside verwendbar. Im allgemeinen wird die verwendete Emulgatormenge — bezogen auf das Polymerisat — 3 Gew.-%, vorzugsweise 1 Gew.-%, nicht überschreiten.

Als Initiator können neben den in der Emulsionspolymerisation üblichen Verbindung, wie z. B. Perverbindungen wie Wasserstoffperoxid, Ammoniumperoxidisulfat (APS) auch Redoxsysteme wie Bisulfit-APS-Eisen sowie Azo-Starter verwendet werden. Die Initiatormenge liegt im allgemeinen bei 0,005 bis 0,5 Gew.-%, bezogen auf das Polymerisat.

Die Polymerisationstemperatur richtet sich innerhalb gewisser Grenzen nach den Initiatoren. So arbeitet man bei Anwendung von APS vorteilhaft im Bereich von 60-90 °C. Bei Einsatz von Redoxsystemen kann auch bei tieferen Temperaturen, beispielsweise bei 30 °C polymerisiert werden. Neben der Zulaufpolymerisation kann auch nach dem Verfahren der Batch-Polymerisation gearbeitet werden. Dabei wird die Gesamtmenge bzw. ein Anteil der Monomeren mit allen Hilfsstoffen vorgelegt und die Polymerisation mit Hilfe von Redox-Initiatoren gestartet. Das Monomer-Wasser-Verhältnis muß dabei der freiwerdenden Reaktionswärme angepaßt werden. In der Regel treten keine Schwierigkeiten auf, wenn man eine 50 %ige Emulsion so erzeugt, daß man zunächst die Hälfte der Monomeren und der Hilfsstoffe in der Gesamtmenge des Wassers emulgiert und dann bei Raumtemperatur die Polymerisation auslöst und nach erfolgter Reaktion den Ansatz abkühlt und die verbleibende Hälfte der Monomeren zusammen mit den Hilfsstoffen zusetzt.

Besonders vorteilhaft gestaltet sich die Verwendung von säurelabilen Emulgatoren (z. B. Natriumsalze langkettiger Carbonsäuren), da die so hergestellte Dispersion einfach auf die Perloberfläche ausgefällt werden kann. Weniger vorteilhaft erscheint dagegen die Verwendung von Dispersionen, die mit großen Mengen an nichtionischen Emulgatoren (z. B. 5 %), elektrolytbeständig ausgerüstet sind.

Dispersionen, die den genannten Anforderungen genügen, sind z. B. in den Beispielen 3 bis 7 aufgeführt.

Das Aufbringen der Dispersion kann prinzipiell auf den unterschiedlichsten Wegen erfolgen. So besteht z. B. eine Form der Aufbringung darin, daß man die — gegebenenfalls erst bei erhöhter Temperatur — filmbildende Dispersion in einem Wirbelschichttrockner auf bereits gewaschenen Perlen aufbringt.

Ein anderes Verfahren ist darin zu sehen, daß man die Dispersion mit dem Waschwasser auf die Perlen aufbringt. Ein weiteres Verfahren besteht darin, daß man die Dispersion durch Fällung, z. B. mit Salzen oder durch Zusatz von Säure auf die Perlen aufbringt.

Ein besonders vorteilhaftes Verfahren ist darin zu sehen, daß die Dispersionen direkt nach

Beendigung der Perlpolymerisation der Perlsuspension zugesetzt werden. In diesem Falle läßt sich z. B. bei Verwendung eines anorganischen Verteilers die Zerstörung des Verteilersystems mit dem Ausfällen der Dispersion auf der Perloberfläche verbinden. Außerdem gewährt die Dispersion auf diesem Wege schon in einem sehr frühen Stadium Schutz gegen ein Verklumpen der Perlen.

Die nachfolgenden Beispiele dienen der Erläuterung der Erfindung. Während in den Beispielen 1 und 2 nicht blockfest ausgerüstete Vergleichsversuche aufgezeigt werden, wird in den Beispielen 3-7 die Herstellung von Polymerdispersionen beschrieben, in den Versuchen 8-16 schließlich wird die Herstellung der erfindungsgemäßen Perlen beschrieben. Abb. 1 zeigt anschaulich, wie gerade die Rieselfähigkeit eines erfindungsgemäßen Perlpolymerisats gegenüber einem herkömmlichen Polymerisat verbessert wird.

Beispiel 1 (Vergleichsbeispiel)

Weiches Perlpolymerisat mit unbehandelter Oberfläche

In einem 2 l-Polymerisationsgefäß, ausgestattet mit Rührer, Rückflußkühler und Thermometer, wird eine Lösung aus 7 g Aluminiumsulfat. 14 $H_2O$ in 1 000 g destilliertem Wasser vorgelegt und auf 75 Grad C erwärmt. Durch Zugabe von 3 g Soda, gelöst in 30 g Wasser, wird Aluminiumhydroxid erzeugt, das als Verteiler wirkt. Im Anschluß daran werden noch 0,12 g des Natriumsalzes einer $C_{14}$-$C_{16}$-Alkylsulfonsäure sowie 0,12 g Polyethylenoxid (Molekulargewicht : 5 000-6 000) in Form einer 20 %igen Lösung in Wasser zugesetzt.

Zu dieser Wasserphase gibt man unter kräftigem Rühren eine Monomermischung, hergestellt aus

300 g Methylmethacrylat
200 g Ethylacrylat
2;5 g Lauroyl-Peroxid
2,5 g Ethylhexylthioglykolat

und polymerisiert 3 Stunden bei einer Badtemperatur von ca. 75 Grad C. Anschließend wird noch 1 Stunde bei 85 Grad C gerührt, danach auf Raumtemperatur abgekühlt, der anorganische Verteiler durch Zugabe von 10 g ca. 50 %iger Schwefelsäure zerstört, abgesaugt und dreimal mit je 500 ml destilliertem Wasser gewaschen. Die Trocknung erfolgt bei Raumtemperatur oder nur leicht darüber, wobei es von Vorteil ist, die Perlen ständig in Bewegung zu halten, um ein Zusammensintern zu vermeiden. Unter Beachtung dieser Vorsichtsmaßnahmen erhält man ein Perlpolymerisat, das bei einer Lagertemperatur von 20 Grad C gut rieselfähig ist. Zum Verhalten dieses Produktes bei erhöhter Lagertemperatur bzw. bei Lagerung unter Stapeldruck siehe Abb. 1.

Beispiel 2 (Vergleichsbeispiel)

Weiches Perlpolymerisat mit unbehandelter Oberfläche

Man verfährt wie in Beispiel 1, ändert jedoch die Zusammensetzung der Monomerphase :

400 g Butylmethacrylat
100 g Methylmethacrylat
2,5 g Lauroyl-Peroxid
2,5 g Ethylhexylthioglykolat

Unter den in Beispiel 1 genannten Vorsichtsmaßnahmen erhält man ein Perlpolymerisat, das nur bei Temperaturen $< 25$ °C rieselfähig ist. Zur Beurteilung der Rieselfähigkeit bei erhöhter Lagertemperatur siehe Tab. 1.

Beispiel 3

Dispersion zur Konfektionierung von Perlpolymerisaten

In einem Witt'schen Topf mit Rückflußkühler, Thermometer, Rührer und Zulaufgefäß wird eine Lösung von

2 g Ammoniumperoxodisulfat und
0,7 g Triisobutylphenol, mit 6 Mol Ethylenoxid oxethyliert, sulfatiert, Na-Salz in
1 450 g Wasser vorgelegt und auf 80 °C erwärmt.

In diese Vorlage tropft man innerhalb von 4 Stunden bei 80 °C eine Emulsion, hergestellt aus

5 g Ammoniumperoxodisulfat
7 g Triisobutylphenol, mit 6 Mol Ethylenoxid oxethyliert, sulfatiert, Na-Salz
5 g Ethylhexylthioglykolat
2 400 g Isobutylmethacrylat und
2 180 g destilliertem Wasser

Nach Zulaufende wird noch 2 Stunden bei 80 °C gerührt.
Nach Abkühlen auf Raumtemperatur erhält man eine koagulatfreie, gut filtrierbare Dispersion.

| | |
|---|---|
| Feststoffgehalt | 39,2 %, Viskosität : 8 m Pa.s, |
| pH-Wert | 2,1 |
| Teilchendurchmesser | 330 nm |

Beispiel 4

Dispersion zur Konfektionierung von Perlpolymerisate

In einem Witt'schen Topf mit Rückflußkühler, Thermometer und Zulaufgefäß wird eine Lösung von

1,6 g Ammoniumperoxodisulfat und
0,008 g Triisobutylphenol, mit 6 Mol Ethylenoxid oxethyliert, sulfatiert, Na-Salz in
800 g destilliertem Wasser vorgelegt und auf 80 °C erwärmt.

Dazu tropft man bei 80 °C innerhalb von 30 Minuten eine Mischung, hergestellt aus

75 g Methylmethacrylat
75 g Butylmethacrylat
0,15 g Ethylhexylthioglykolat
0,08 g des oben genannten Emulgators und
0,1 g Wasser.

Im Anschluß daran tropft man ebenfalls bei 80 °C innerhalb von 210 Minuten eine Monomer-Emulgatormischung zu, bestehend aus :

525 g Methylmethacrylat
525 g Butylmethacrylat
1 g Ethylhexylthioglykolat
2,5 g des oben genannten Emulgators sowie
2,5 g Wasser

Nach Beendigung des Zulaufs wird noch 2 Stunden bei 80 °C gerührt. Nach Abkühlen auf Raumtemperatur wird filtriert.
Es resultiert eine grobteilige Dispersion :

| | |
|---|---|
| Feststoffgehalt | 60 % |
| pH-Wert | 2,2 |
| Viskosität | 70 mPa.s |
| Teilchendurchmesser | 850 nm. |

Beispiel 5

Dispersion zur Konfektionierung von Perlpolymerisaten

Man verfährt wie in Beispiel 3, ändert jedoch die Menge und Art der Hilfsstoffe :

Vorlage :
1,8 g Natriumsalz der 4,4'-Azobis-(4-cyanovaleriansäure)
3,6 g Natriumlaurat
400 g destilliertes Wasser
Emulsionszulauf :
2 400 g Isobutylmethacrylat
5 g Ethylhexylthioglykolat
5 g Natriumsalz der 4,4'-Azobis-(4-cyanovaleriansäure)
32 g Natriumlaurat
3 260 g destilliertes Wasser

Es resultiert eine gut filtrierbare Dispersion :

| | |
|---|---|
| Feststoffgehalt | 40 % |
| Viskosität | 18 mPa.s |
| pH-Wert | 9,6 |
| Teilchendurchmesser | 140 nm. |

Beispiel 6

Dispersion zur Konfektionierung von Perlpolymerisaten

Man verfährt wie in Beispiel 3, ändert jedoch die Menge und die Art der Monomeren und der Hilfsstoffe.

Vorlage :
0,14 g Nonylphenol mit 5 Mol Ethylenoxid oxethyliert, phosphatiert, freie Säure
2 g 4,4′-Azobis-(4-cyanovaleriansäure)
1,2 g Natriumhydrogencarbonat
1 600 g destilliertes Wasser
Emulsionszulauf :
22 g Nonylphenol mit 5 Mol Ethylenoxid oxethyliert, phosphatiert, freie Säure
4 g 4,4′-Azobis(4-cyanaovaleriansäure)
2,4 g Natriumhydrogencarbonat
6 g Ethylhexylthioglykolat
1 000 g Ethylacrylat
3 000 g Methylmethacrylat
2 400 g destilliertes Wasser

Es resultiert eine gut filtrierbare Dispersion :

| | |
|---|---|
| Feststoffgehalt | 50 % |
| Viskosität | 200 mPa.s |
| pH-Wert | 4,3 |
| Teilchendurchmesser | 340 nm. |

Beispiel 7

Dispersion zur Konfektionierung von Perlpolymerisaten

Man verfährt wie in Beispiel 6, ändert jedoch die Monomerzusammensetzung und die Menge des Reglers :

4 000 g Methylmethacrylat (anstelle der Mischung aus Ethylacrylat und Methylmethacrylat)
3 g Ethylhexylthioglykolat (statt 6 g in Beispiel 6)

Man erhält eine gut filtrierbare Dispersion :

| | |
|---|---|
| Feststoffgehalt | 50 % |
| pH-Wert | 4,3 |

Beispiel 8

Blockfestes weiches Perlpolymerisat

100 g der gemäß Beispiel 1 hergestellten, bereits zweimal mit destilliertem Wasser gewaschenen, jedoch noch nicht getrockneten Perlen werden in ca. 100 ml einer 10 %igen Dispersion (hergestellt aus 20 g Dispersion gemäß Beispiel 6 und 80 g destilliertes Wasser) aufgeschlämmt und etwa 5 Minuten gerührt. Anschließend wird die Dispersion abgenutscht oder abgeschleudert.

Danach wird das Perlpolymerisat im Wirbelschichttrockner getrocknet.

Man erhält ein im Vergleich zum unbehandelten Perlpolymerisat in der Blockfestigkeit deutlich verbessertes Produkt. (Siehe Abb. 1 und Tab. 1).

Das Filtrat, das den größten Teil der Dispersion unverändert enthält, kann zur Konfektionierung weiterer Chargen Perlpolymerisat verwendet werden. Dabei empfiehlt es sich jedoch in gewissen Abständen die mit den Perlen ausgetragenen Dispersionsverluste durch Zugabe von Dispersion gemäß Beispiel 6 zu ersetzen.

Beispiel 9

Blockfestes weiches Perlpolymerisat

Man wiederholt den Ansatz gemäß Beispiel 1:
3 Stunden Polymerisation bei 75 °C, anschließend
1 Stunde Nacherhitzen bei 85 °C.
Danach wird jedoch durch folgende Maßnahmen konfektioniert:

Der Reaktionsansatz wird auf ca. 40 °C gekühlt, bei dieser Temperatur werden 10 g Dispersion gemäß Beispiel 6 verdünnt mit 30 g destilliertem Wasser zugesetzt. Nach etwa 5 Minuten Rühren bei 40 °C setzt man zur Zerstörung des anorganischen Verteilers und zum Ausfällen der Dispersion 30 g 10 %ige Schwefelsäure zu. Man rührt noch ca. 15 Minuten bei 40 °C, kühlt anschließend auf Raumtemperatur und saugt ab.

(Filtrat: völlig klar.)

Die Perlen werden noch zweimal mit 500 ml destilliertem Wasser gewaschen und anschließend bei Raumtemperatur getrocknet.

Man erhält ein gut rieselfähiges Produkt, das auch bei erhöhter Lagertemperatur nicht verklumpt. (Siehe Tab. 1).

Beispiel 10

Blockfestes weiches Perlpolymerisat

Man wiederholt den Polymerisationsansatz gemäß Beispiel 2:

3 Stunden Polymerisation bei 75 °C, anschließend Nacherhitzen bei 85 °C. Danach wird jedoch durch Zugabe von Dispersion konfektioniert:

Man kühlt den Reaktionsansatz auf 65 °C ab, gibt 12,5 g Dispersion gemäß Beispiel 3 (verdünnt mit der 3-fachen Menge an destilliertem Wasser) hinzu, säuert mit 2,5 g 50 %iger Schwefelsäure an und rührt darauf 10 Minuten bei 65 °C. Anschließend wird auf 30 °C abgekühlt, zweimal mit je 500 ml destilliertem Wasser gewaschen und danach im Wirbelschichttrockner bei 50 °C getrocknet.

Man erhält ein gut rieselfähiges Pulver, das auch bei einer Lagertemperatur > Raumtemoeratur nicht verklumpt. (Siehe Tab. 1).

Beispiel 11

Blockfestes weiches Perlpolymerisat

Man verfährt wie in Beispiel 10, verwendet jedoch zur Konfektionierung die relativ grobteilige, emulgatorarme Dispersion gemäß Beispiel 4.

Menge der zugesetzten Dispersion: 12 g (≙ 7,2 g Dispersionsfeststoff).

Die Dispersion wird mit der 3-fachen Menge an destilliertem Wasser verdünnt und bei 65 °C zugegeben. Anschließend wird mit 30 g einer 12 %igen Schwefelsäure angesäuert und noch 10 Minuten bei 65 °C gerührt. Nach Abkühlen, Abnutschen, Waschen und Trocknen wie in Beispiel 10 beschrieben, erhält man ein gut rieselfähiges Perlpolymerisat, das auch bei einer Lagertemperatur von 40 °C nicht verklumpt.

Beispiel 12

Blockfestes weiches Perlpolymerisat

Man verfährt wie in Beispiel 1, wählt jedoch eine andere Zusammensetzung der Monomerphase:

500 g Butylmethacrylat
2,5 g Lauroyl-Peroxid
2,5 g Ethylhexylthioglykolat

Man polymerisiert 3 Stunden bei 75 °C und rührt anschließend noch 1 Stunde bei 85 °C. Danach kühlt man auf 30 °C und setzt 20 g Dispersion gemäß Beispiel 7 zu.

Die Dispersion wird vor der Zugabe mit 40 g destilliertem Wasser verdünnt. Nach Ansäuern mit 50 g 12 %iger Schwefelsäure wird noch 15 Minuten bei 30 °C gerührt, anschließend wird auf 20 °C abgekühlt, abgesaugt, zweimal mit jeweils 500 ml destilliertem Wasser gewaschen und im Wirbelschichttrockner getrocknet. Man erhält gut rieselfähige Perlen, die auch bei erhöhter Lagertemperatur (45 °C) nicht verklumpen. (Siehe Tab. 1).

Beispiel 13

Blockfestes weiches Perlpolymerisat

Man verfährt wie in Beispiel 12, wählt jedoch eine andere Zusammensetzung der Monomerphase:

300 g Ethylacrylat
200 g Methylmethacrylat
2,5 g Lauroylperoxid
2,5 g Ethylhexylthioglykolat

Die Konfektionierung wird wie in Beispiel 12 durch Zugabe von 20 g Dispersion gemäß Beispiel 7 durchgeführt.

Man erhält gut rieselfähige Perlen, die auch bei erhöhter Lagertemperatur (40 °C) nicht verklumpen. (Siehe Tab. 1).

Beispiel 14

Blockfestes weiches Perlpolymerisat

In einem 2 l-Polymerisationsgefäß, ausgestattet mit Rührer, Rückflußkühler und Thermometer, wird eine Lösung aus 7 g Aluminiumsulfat. 14 $H_2O$ in 1 000 g destilliertem Wasser vorgelegt und auf 75 °C erwärmt. Durch Zugabe von ca. 3,3 g Soda (gelöst in 30 g Wasser) wird ein pH-Wert von 5,8 eingestellt. Danach werden 0,12 g des Natriumsalzes einer $C_{14}$-$C_{16}$-Alkylsulfonsäure sowie 0,12 g eines Polyethylenoxids (Molekylargewicht 5 000-6 000) zugesetzt.

Zu dieser Wasserphase gibt man unter kräftigem Rühren eine Monomermischung, hergestellt aus :

200 g Vinylacetat
200 g Methylacrylat
3 g Lauroylperoxid
1,5 g Ethylhexylthioglykolat

Man polymerisiert 2 Stunden bei einer Badtemperatur von 72 °C, anschließend wird auf 25 °C gekühlt. Nach Zugabe von 16 g der Dispersion gemäß Beispiel 7 (verdünnt mit 50 g Wasser) und anschließend 30 g 10 %ige Schwefelsäure wird noch 10 Minuten bei 25 °C gerührt. Nach Abkühlen auf 20 °C läßt man die Perlen absitzen, schlämmt in 2 l destilliertem Wasser auf, dekantiert, schlämmt nochmals mit 2 l destilliertem Wasser auf und saugt das Produkt ab. Anschließend wird noch einmal mit 500 ml destilliertem Wasser gewaschen.

Nach Trocknung bei Raumtemperatur resultiert ein gut rieselfähiges Perlpolymerisat. (Siehe Tab. 1).

Beispiel 15

Blockfestes weiches Perlpolymerisat

In einem 2 l-Polymerisationsgefäß wird die Wasserphase — wie in Beispiel 1 beschrieben — hergestellt. Dazu gibt man unter kräftigem Rühren eine Monomerphase hergestellt aus :

400 g Methylacrylat
3 g Lauroylperoxid
0,65 g Ethylhexylthioglykolat

Man polymerisiert bei ca. 70 °C. Bereits nach 10 Minuten steigt die Innentemperatur aufgrund der heftigen Reaktion auf über 80 °C. Anschließend hält man die Innentemperatur noch 90 Minuten bei 80 °C. Danach wird auf 25 °C abgekühlt.

Nach Zugabe von 20 g Dispersion gemäß Beispiel 7 (1 : 1 verdünnt mit Wasser) wird mit 30 g 10 %iger Schwefelsäure angesäuert und anschließend 15 Minuten bei 25 °C gerührt. Danach verdünnt man mit 500 g destilliertem Wasser, kühlt auf 20 °C, saugt das Perlpolymerisat ab und wäscht zweimal mit 500 ml destilliertem Wasser.

Nach Trocknung bei Raumtemperatur erhält man ein gut rieselfähiges Perlpolymerisat.

Beispiel 16

Blockfestes weiches Perlpolymerisat

Man wiederholt den Ansatz gemäß Beispiel 15, verwendet zur Konfektionierung 30 g der Dispersion gemäß Beispiel 5. Nach Trocknung bei Raumtemperatur erhält man ein gut rieselfähiges Perlpolymerisat.

Die Ergebnisse der Versuche sind in der folgenden Tabelle 1 wiedergegeben. Abb. 1 stellt das Verhalten des erfindungsgemäßen Perlpolymerisats gemäß Beispiel 8 unter Stapeldruckbelastung im Vergleich mit dem entsprechenden unbehandelten Perlpolymerisat gemäß Beispiel 1 dar.

Dabei wird der Bewertungsschlüssel (« Note ») gemäß Tabelle 1 angewendet, d. h. 1 = voll rieselfähig usw. bis 6 = ohne Hilfsmittel nicht aufbrechbar.

Tab. 1 Charakterisierung der erfindungsgemäßen Perlpolymerisate

| Nr. | Zusammensetzung der Perlpolymerisate * | | | | | Perlp. Tg***** | Zusammensetzung der eingesetzten Dispersion * | | | | Dispersion/ Perlpolym. ** | Disp. Tg ***** | Beurteilung der Rieselfähigkeit bei [°C] *** | | | Löslichkeit in org. Lösungsmitteln **** |
|---|---|---|---|---|---|---|---|---|---|---|---|---|---|---|---|---|
| | MA | EA | MMA | BMA | VA | [°C] | EA | MMA | BMA | JBMA | [%] | [°C] | 30 | 40 | 45 | |
| 1 | - | 40 | 60 | - | - | 42 | unbehandelt | | | | | - | 3 | 4-5 | 6 | klar |
| 8 | - | 40 | 60 | - | - | 42 | 25 | 75 | - | - | ca. 1 | 64 | 1 | 1 | 1 | klar |
| 9 | - | 40 | 60 | - | - | 42 | 25 | 75 | - | - | 1 | 64 | 1 | 1 | 1-2 | klar |
| 2 | - | - | 20 | 80 | - | 34 | unbehandelt | | | | | - | 2-3 | 3-4 | 5 | klar |
| 10 | - | - | 20 | 80 | - | 34 | - | - | - | 100 | 1 | 53 | 1 | 1 | 1-2 | klar |
| 11 | - | - | 20 | 80 | - | 34 | - | 50 | 50 | - | 1,4 | 58 | 1 | 1 | 1-2 | klar |
| 12 | - | - | - | 100 | - | 20 | - | 100 | - | - | 2 | 105 | 1 | 1 | 2-3 | klar |
| 13 | - | 60 | 40 | - | - | 19 | - | 100 | - | - | 2 | 105 | 1 | 1 | 2-3 | klar |
| 14 | 50 | - | - | - | 50 | 19 | - | 100 | - | - | 2 | 105 | 1 | 1 | 1-2 | klar |
| 15 | 100 | - | - | - | - | 10 | 25 | 75 | - | - | 2,5 | 64 | 1 | 1-2 | 1-2 | leicht trüb |
| 16 | 100 | - | - | - | - | 10 | - | - | - | 100 | 3 | 53 | 1 | 2-3 | 4 | leicht trüb |

MA = Methylacrylat
EA = Ethylacrylat
MMA = Methylmethacrylat
BMA = Butylmethacrylat
JBMA = Isobutylmethacrylat
VA = Vinylacetat

*** Beurteilungsschlüssel :
1 voll rieselfähig
2 leicht zusammengebacken, gut zerbröselbar
3 zusammengebacken, leicht aufbrechbar
4 zusammengebacken, schwer aufbrechbar
5 fest zusammengebacken, noch aufbrechbar
6 ohne Hilfsmittel nicht aufbrechbar

* Menge und Art der verw. Polymerisationshilfsstoffe siehe bei den Herstellungsvorschriften
** Dispersionsfeststoff/Perlpolymerisat
**** Aussehen einer 10 %igen Lösung im Methylethylketon
***** Aus der Monomerzusammensetzung berechnet

## Patentansprüche

1. Verfahren zur Herstellung blockfester, weicher Acrylat-Polymerisatperlen, die in an sich bekannter Weise durch Perlpolymerisation hergestellt werden, dadurch gekennzeichnet, daß man nach abgeschlossener Perlpolymerisation auf die Polymerisatperlen, die eine Glastemperatur ($Tg_{Perle}$) von unter 70 Grad C besitzen, ein haftendes Deposit aus einer Acrylatdispersion aufbringt, wobei die Glastemperatur des Deposits ($Tg_{Deposit}$) über 40 Grad C liegt und um wenigstens 10 Grad C höher gewählt wird als die Glastemperatur der Perlen ($Tg_{Perle}$).

2. Verfahren gemäß Anspruch 1, dadurch gekennzeichnet, daß die Polymerisatperlen eine Glastemperatur ($Tg_{Perle}$) unter 50 °C besitzen.

3. Verfahren gemäß den Ansprüchen 1 und 2, dadurch gekennzeichnet, daß eine unter den Aufgabebedingungen filmbildende Polymerdispersion verwendet wird.

4. Verfahren gemäß den Ansprüchen 1 und 2, dadurch gekennzeichnet, daß eine nicht filmbildende Dispersion verwendet wird.

5. Verfahren gemäß den Ansprüchen 1 bis 4, dadurch gekennzeichnet, daß die Polymerdispersion weniger als 3 Gew.-%, vorzugsweise < 1 Gew.-% an Emulgatoren, bezogen auf den Polymerisatfeststoff, enthält.

6. Verfahren gemäß den Ansprüchen 1 bis 6, dadurch gekennzeichnet, daß das Deposit auf dem Perlpolymerisat 0,2 bis 20 Gew.-%, vorzugsweise 0,5 bis 5 Gew.-%, bezogen auf das Trockengewicht des aus der Dispersion aufgebrachten Polymerisats im Verhältnis zum Trockengewicht des Perlpolymerisats beträgt.

## Claims

1. Process for preparing non-clogging, soft acrylate polymer beads which are prepared in a manner known per se by bead polymerisation, characterised in that after the bead polymerisation has ended an adhering deposit consisting of an acrylate dispersion is applied to the polymer beads, which have a glass transition temperature ($Tg_{bead}$) of below 70 °C, the glass transition temperature of the deposit ($Tg_{deposit}$) being above 40 °C and being selected to be at least 10 °C higher than the glass transition temperature of the beads ($Tg_{bead}$).

2. Process according to claim 1, characterised in that the beads of polymer have a glass transition temperature ($Tg_{bead}$) of below 50 °C.

3. Process according to claims 1 and 2, characterised in that a polymer dispersion which forms a film under the conditions of application is used.

4. Process according to claims 1 and 2, characterised in that a non-film forming dispersion is used.

5. Process according to claims 1 to 4, characterised in that the polymer dispersion contains less than 3 % by weight, preferably less than 1 % by weight of emulsifiers, based on the polymer solids.

6. Process according to claims 1 to 5, characterised in that the deposit on the bead polymer amounts to 0.2 to 20 % by weight, preferably 0.5 to 5 % by weight, based on the dry weight of the polymer applied from the dispersion in relation to the dry weight of the bead polymer.

## Revendications

1. Procédé de préparation de perles de polymère d'acrylate molles et résistantes à l'adhérence de contact qui sont produites de façon connue en soi par polymérisation en perles, caractérisé en ce qu'après l'achèvement de la polymérisation en perles, on applique sur les perles de polymère, qui ont une température de transition vitreuse ($Tg_{perles}$) de moins de 70 °C, un dépôt adhérent d'une dispersion d'acrylate, la température de transition vitreuse du dépôt ($TG_{dépôt}$) se situant au-dessus de 40 °C et étant choisie à une valeur supérieure d'au moins 10 °C à la température de transition vitreuse des perles ($Tg_{perles}$).

2. Procédé selon la revendication 1, caractérisé en ce que les perles de polymère ont une température de transition vitreuse ($Tg_{perles}$) de moins de 50 °C.

3. Procédé selon la revendication 1 ou 2, caractérisé en ce qu'on utilise une dispersion de polymère qui est filmogène dans les conditions prescrites.

4. Procédé selon la revendication 1 ou 2, caractérisé en ce qu'on utilise une dispersion non filmogène.

5. Procédé selon l'une quelconque des revendications 1 à 4, caractérisé en ce que la dispersion de polymère contient moins de 3 % en poids, de préférence moins de 1 % en poids d'émulgateur par rapport à la matière solide du polymère.

6. Procédé selon l'une quelconque des revendications 1 à 5, caractérisé en ce que le dépôt sur le polymère en perles se situe entre 0,2 et 20 % en poids, de préférence entre 0,5 et 5 % en poids, exprimé en poids sec de polymère appliqué à partir de la dispersion, par rapport au poids sec du polymère en perles.

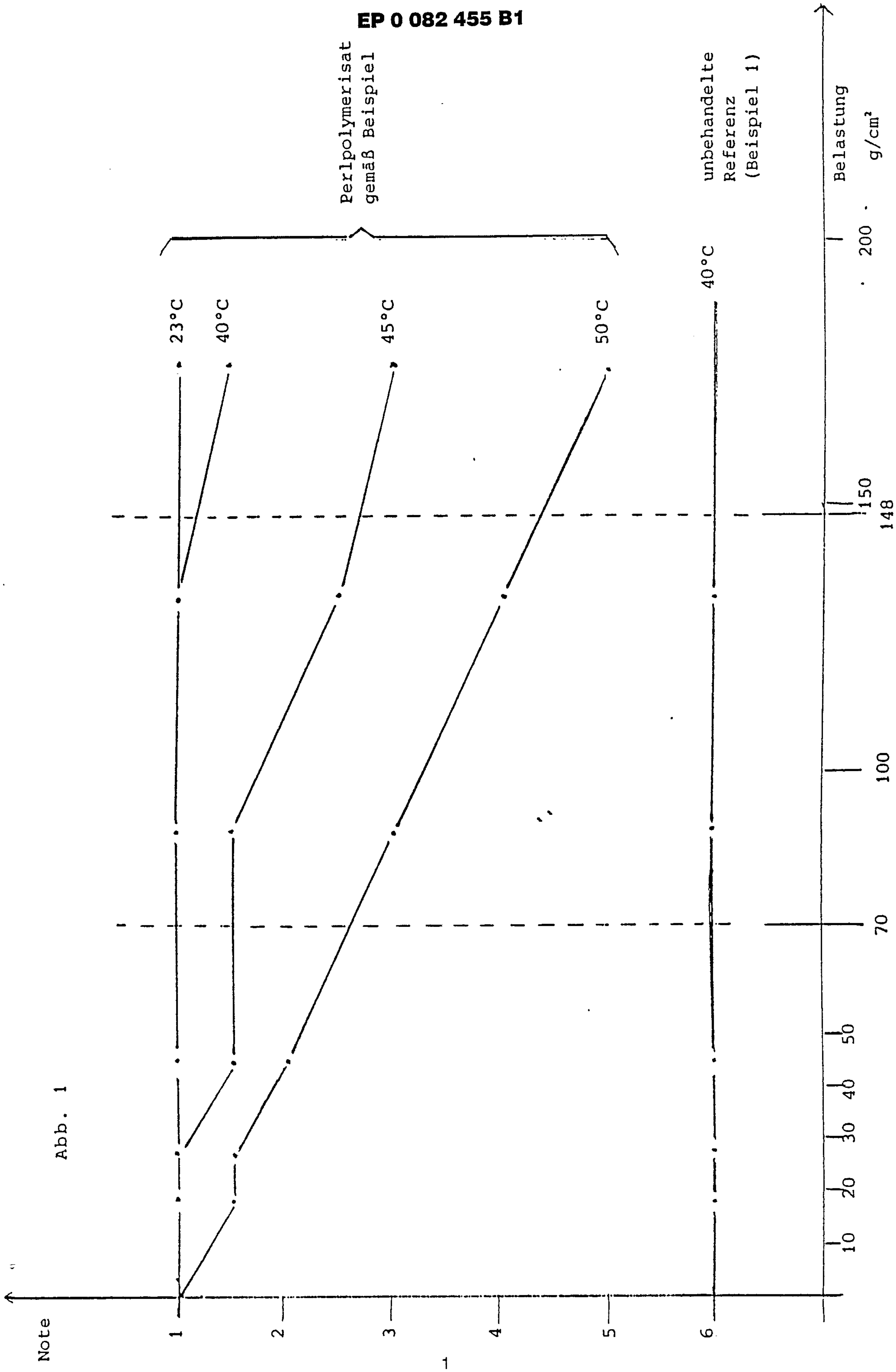
Perlpolymerisat
gemäß Beispiel
unbehandelte
Referenz
(Beispiel 1)
Belastung
g/cm²
23°C
40°C
45°C
50°C
40°C
10
20
30
40
50
70
100
148
150
200
Note
1
2
3
4
5
6

Abb. 1